# DEMANDE DE BREVET EUROPEEN

(11) **EP 1 117 174 A1**
(43) Date de publication de la demande: **18.07.2001**
(21) Numéro de dépôt: 01400057.4
(22) Date de dépôt: 10.01.2001
(51) Int. Cl.: H02K 23/66

(54) **Motoréducteur destiné à des équipements fonctionnels de véhicules, pourvu d'une bague magnétique de mesure de la vitesse de rotation de son arbre d'induit**

(30) Priorité: 13.01.2000 FR 0000412
(71) Demandeur: Meritor Light Vehicle Systems-France, 45000 Sully sur Loire (FR)
(72) Inventeur: Le Hir, Michel, 14110 Condée sur Noireau (FR); Jeusset, Alain, 14210 Amaye sur Orne (FR)
(74) Mandataire: Moncheny, Michel

(57) **Abrégé**

Motoréducteur destiné à des équipements fonctionnels de véhicule, comprenant un rotor pourvu d'un arbre d'induit portant un collecteur (9), et un carter réducteur contenant une roue dentée en prise avec une vis sans fin de l'arbre, ainsi qu'une bague magnétique (17) montée sur l'arbre pour permettre un comptage du nombre de tours de l'arbre, caractérisé en ce que la bague magnétique (17) est fixée sur le collecteur (9). La bague (17) peut être fixée de diverses manières, par exemple par surmoulage sur le corps (18), la bague (17) s'étendant pratiquement sur toute la longueur de celui-ci et les crochets (11) de retenue des connexions électriques du rotor étant fixés sur la bague magnétique. La fixation de la bague directement sur le collecteur, dont elle fait partie intégrante, permet d'assurer un maintien fiable et durable de la bague.

## Description

La présente invention a pour objet un motoréducteur destiné à des équipements fonctionnels de véhicule, tel que lève-vitre, toit ouvrant etc.

Un tel motoréducteur comprend un rotor pourvu d'un arbre d'induit portant un collecteur, et un carter réducteur contenant une roue dentée en prise avec une vis sans fin de l'arbre. Afin de permettre de réaliser un comptage du nombre de tours de l'arbre, on monte une bague magnétique sur celui-ci, entre le collecteur et un palier de roulement disposé dans le carter. Ce montage est effectué à force (« press fit ») au moyen de crantages longitudinaux ménagés sur l'arbre, qui maintiennent la bague en place.

Cet agencement nécessite donc l'assemblage de deux pièces sur les lignes de montage du motoréducteur. On constate qu'après une certaine durée de service le maintien de la bague sur l'arbre devient aléatoire, la bague ayant tendance à se désolidariser de l'arbre, ce qui peut dans certains cas aboutir à la destruction même de cette bague magnétique. Ce maintien défectueux de la bague sur l'arbre peut provenir d'un défaut d'alignement de la bague et de l'arbre pendant l'opération d'assemblage, et le cas échéant du fait que le diamètre intérieur de la bague magnétique est trop faible.

L'invention a donc pour but de proposer un motoréducteur dans lequel la bague magnétique de comptage de la vitesse de l'arbre en rotation soit fixée à celui-ci de manière plus fiable dans le temps.

Conformément à l'invention, la bague magnétique est fixée sur le collecteur de l'arbre.

Cette fixation sur le collecteur peut être assurée de manière plus sûre que sur la partie de l'arbre comprise entre le collecteur et le palier, et ce par divers moyens.

Conformément à un mode de réalisation de l'invention, la bague magnétique est surmoulée sur le corps du collecteur.

Selon un second mode de réalisation possible, la bague magnétique est logée dans un dégagement annulaire agencé sur le corps du collecteur, sur lequel elle est collée ou surmoulée.

D'autres particularités et avantages de l'invention apparaîtront au cours de la description qui va suivre, faite en référence aux dessins annexés qui en illustrent plusieurs formes de réalisation possibles.

La figure 1 est une vue en élévation longitudinale et coupe partielle d'un motoréducteur pour l'entraînement d'équipements fonctionnels de véhicules automobiles, selon l'état de l'art antérieur à l'invention.

La figure 2 est une vue en élévation longitudinale du collecteur du motoréducteur, équipé d'une bague magnétique de comptage fixée conformément à un premier mode de réalisation de l'invention.

Les figures 3, 4 et 5 sont des vues en élévation du collecteur analogues à la figure 2, représentant trois autres formes possibles de réalisation de l'invention.

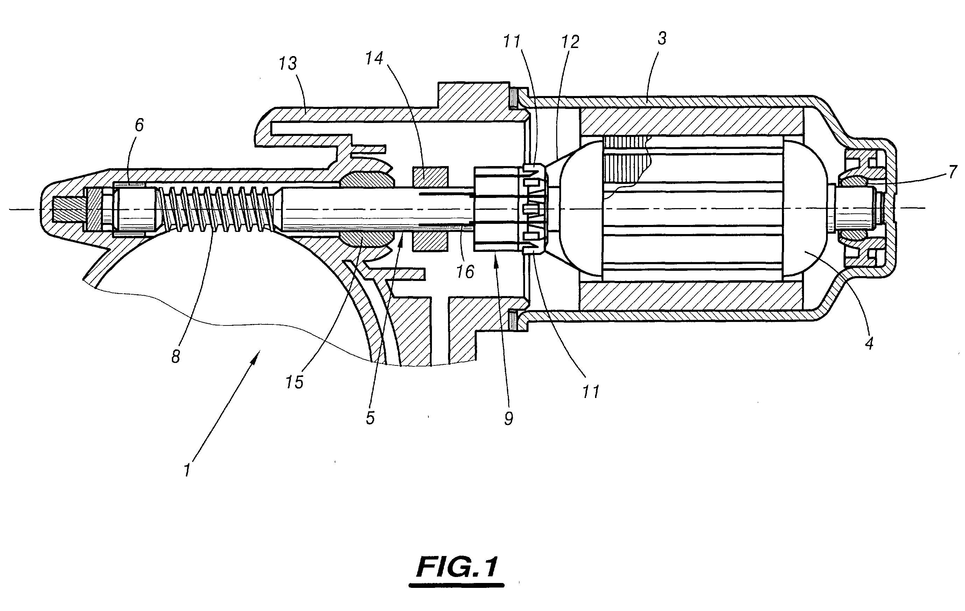

Le motoréducteur 1 illustré à la figure 1 est destiné notamment à l'entraînement d'équipements fonctionnels de véhicules, tels que lève-vitre électrique et toit ouvrant.

II comprend, logé à l'intérieur d'un boîtier pouvant être alimenté par des connexions électriques non représentées, un stator 3 et un rotor 4 pourvu d'un arbre d'induit 5 dont les extrémités sont montées dans des paliers 6, 7 de roulement. Cet arbre d'induit porte une vis sans fin 8 en prise avec une roue dentée non représentée pouvant entraîner un organe de sortie également non représenté, qui lui-même entraîne l'équipement associé au motoréducteur, par exemple un lève-vitre.

L'arbre d'induit 5 porte un collecteur 9 équipé sur sa périphérie d'une série de crochets 11 de retenue des connexions électriques 12 du rotor 4. L'arbre 5 est logé à l'intérieur d'un carter réducteur 13 contenant également la roue dentée et l'organe de sortie.

Le motoréducteur 1 est pourvu d'une bague magnétique 14 montée, selon l'art antérieur à l'invention illustré à la figure 1, sur la partie de l'arbre 5 comprise entre le collecteur 9 et un palier 15 de roulement logé dans le carter réducteur 13. Cette bague magnétique 14 est maintenue en place au moyen de crantages longitudinaux 16 de l'arbre 5 et a pour fonction de permettre la mesure de la vitesse de l'arbre 5 en rotation, en association avec des moyens connus et non représentés.

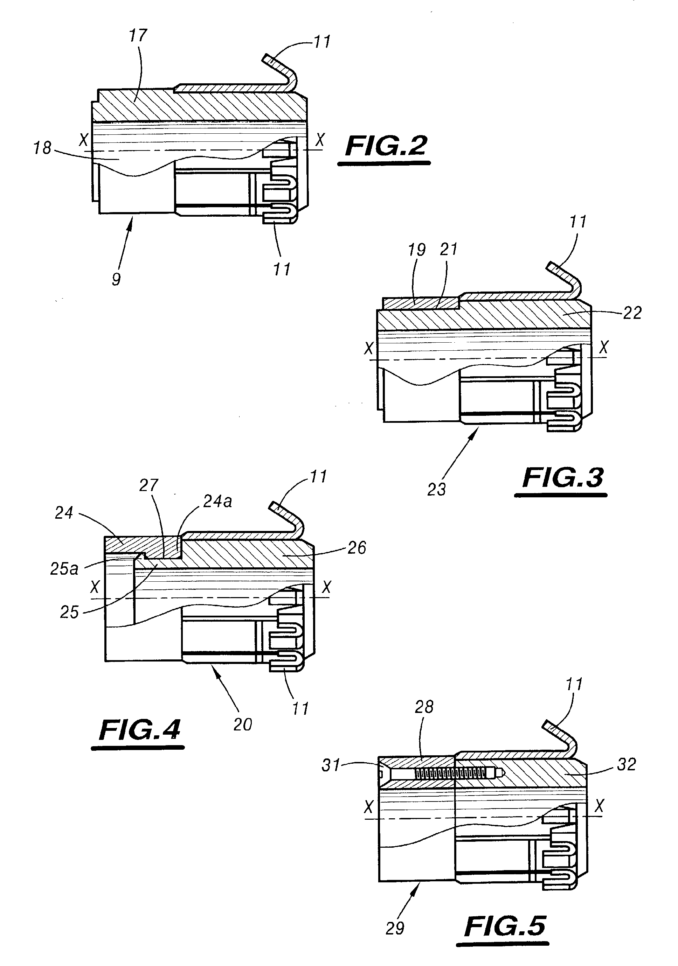

Suivant une première forme de réalisation de l'invention, illustrée à la figure 2, le motoréducteur 1 est muni d'une bague magnétique 17 surmoulée sur le corps 18 du collecteur 9. La bague 17 constitue une douille s'étendant sur sensiblement toute la longueur du corps 18, les crochets 11 étant eux-mêmes fixés sur la périphérie de la bague 17, laquelle constitue une partie intégrante du collecteur 9.

Dans la seconde forme de réalisation de l'invention, illustrée à la figure 3, la bague magnétique 19 est logée dans un dégagement annulaire 21 agencé sur le corps 22 du collecteur 23 à l'extrémité de celui-ci laissée libre par les crochets 11. La bague 19 est fixée dans le dégagement 21 par collage ou par surmoulage.

Dans la troisième forme de réalisation de l'invention illustrée à la figure 4, la bague magnétique 24 est encliquetée élastiquement sur une extension annulaire (clip) 25 du corps 26 du collecteur 20. Cette extension 25 délimite dans l'extrémité du corps 26 laissée libre par les crochets 11 un logement annulaire 27 dans lequel peut venir s'encliqueter une extrémité 24a de la bague 24 saillant radialement, après franchissement d'un bossage terminal 25a saillant radialement de l'extension 25.

Dans la quatrième forme de réalisation de l'invention illustrée à la figure 5, la bague magnétique 28 est fixée à une extrémité du collecteur 29 laissée libre par les crochets 11, par au moins deux vis 31 parallèles à l'axe longitudinal XX du collecteur 29 et diamétralement opposées. Les vis 31 traversent la bague 28 sur toute sa largeur et viennent se visser dans le corps 32 du collecteur 29.

D'autres moyens de fixation de la bague magnétique sur le collecteur du motoréducteur peuvent être envisagés dans le cadre de l'invention. La fixation de la bague directement sur le corps du collecteur permet de réaliser un assemblage sûr et durable dans le temps.

## Revendications

1. Motoréducteur (1) destiné à des équipements fonctionnels de véhicule, comprenant un rotor (4) pourvu d'un arbre d'induit (5) portant un collecteur (9), et un carter réducteur (13) contenant une roue dentée en prise avec une vis sans fin (8) de l'arbre, ainsi qu'une bague magnétique (14) montée sur l'arbre pour permettre un comptage du nombre de tours de l'arbre, caractérisé en ce que la bague magnétique (17 ; 19...) est fixée sur le collecteur (9, 23...).

2. Motoréducteur selon la revendication 1, caractérisé en ce que la bague magnétique (17) est surmoulée sur le corps (18) du collecteur (9).

3. Motoréducteur selon la revendication 1, caractérisé en ce que la bague magnétique (19) est logée dans un dégagement annulaire (21) agencé sur le corps (22) du collecteur (23), sur lequel elle est collée ou surmoulée.

4. Motoréducteur selon la revendication 3, caractérisé en ce que le dégagement annulaire (21) est agencé à une extrémité du collecteur (23) laissée libre par des crochets (11) de retenue des connecteurs électriques du rotor (4).

5. Motoréducteur selon la revendication 1, caractérisé en ce que la bague magnétique (24) est encliquetée élastiquement sur une extension annulaire (25) du collecteur (20).

6. Motoréducteur selon la revendication 1, caractérisé en ce que la bague magnétique (28) est fixée à une extrémité du collecteur (29) par au moins deux vis (31) parallèles à l'axe (XX) du collecteur.
